# EUROPÄISCHE PATENTANMELDUNG

(11) **EP 2 466 185 A1**
(43) Veröffentlichungstag der Anmeldung: **20.06.2012**
(21) Anmeldenummer: 11193226.5
(22) Anmeldetag: 13.12.2011
(51) Int. Cl.: F16L 59/075

(54) **Kunststoffverbundrohr, seine Verwendung und Verfahren zu seiner Herstellung**

(30) Priorität: 14.12.2010 DE 102010054490
(71) Anmelder: REHAU AG + Co, 95111 Rehau (DE)
(72) Erfinder: Oelschlegel, Alexander, 95176 Konradsreuth (DE); Steffl, Udo, 95466 Weidenberg (DE); Kania, Guido, 91080 Marloffstein (DE); Kessler, Lutz, 95111 Rehau (DE)

(57) **Zusammenfassung**

Die Erfindung betrifft ein Kunststoffverbundrohr (1), das ein von einem Trägermedium, insbesondere Wasser, durchströmbares Innenrohr (2), eine Isolierungsschicht (3) aus Polymerschaum und eine Außenhülle (4) umfasst, wobei der Polymerschaum der Isolierungsschicht (3) aus einer Vielzahl von Polymerschaumsträngen (5) aufgebaut ist, sowie dessen Verwendung zum Transport eines Wärmeträgermediums in einem Nah- oder Fernwärmenetz. Darüber hinaus betrifft die Erfindung ein Verfahren zur Herstellung eines derartigen Kunststoffverbundrohres (1), das die folgenden Stufen umfasst:
(i) Extrudieren eines von einem Trägermedium durchströmbaren Innenrohres (2),
(ii) Extrudieren einer Vielzahl von Polymerschaumsträngen unter Bildung einer Isolierungsschicht (3) um das Innenrohr (2), und
(iii) Extrudieren einer Außenhülle (4) um die das Innenrohr (2) einschließende Isolierungsschicht (3).

## Beschreibung

Die vorliegendeErfindung bezieht sich auf ein Kunststoffverbundrohr, auf die Verwendung des Kunststoffverbundrohres und auf ein Verfahren zu seiner Herstellung. Spezieller bezieht sich die vorliegende Erfindung auf ein Kunststoffverbundrohr, das ein von einem Trägermedium, insbesondere Wasser, durchströmbares Innenrohr, eine Isolierungsschicht aus Polymerschaum und eine Außenhülleumfasst, wobei der Polymerschaum der Isolierungsschicht aus einer Vielzahl von Polymerschaumsträngen aufgebaut ist. Weiterhin bezieht sich die vorliegende Erfindung auf die Verwendung des erfindungsgemäßen Kunststoffverbundrohres zum Transport eines Wärmeträgermediums in einem Nah- oder Fernwärmenetz. Darüber hinaus bezieht sich die vorliegende Erfindung auf ein Verfahren zur Herstellung des erfindungsgemäßen Kunststoffverbundrohres, wobei das Verfahren die Stufen des Extrudierens des von einem Trägermedium durchströmbaren Innenrohres, des Extrudierens einer Vielzahl von Polymerschaumsträngen unter Bildung einer Isolierungsschicht um das Innenrohr und des Extrudierens einer Außenhülle um die das Innenrohr einschließende Isolierungsschicht umfasst.

Kunststoffverbundrohre sind mit einer Wärmedämmung oder Isolierung ausgestattete Rohrleitungen, durch die ein wärme- oder kältetragendes Medium, insbesondere Wasser, transportiert werden kann. Häufig werden sie zum Wärmetransport in Nah- und Fernwärmenetzen eingesetzt. Derartige Kunststoffverbundrohre werden in der Regel direkt im Erdreich verlegt und sind auf spezifische Anforderungen in Bezug auf die zu transportierenden Medien (wärmetragendes oder kältetragendes Medium) und Verlegebedingungen (Erdlasten, einwirkender Druck usw.) aus verschiedenen Polymerschichten aufgebaut.

Derartige Kunststoffverbundrohre sind im Stand der Technik bekannt. So offenbart die DE 2 413 133 A ein derartiges biegsames Verbundrohr, das aus einem Innenrohr aus einem vernetzten Polyolefin und einer äußeren Schaumstoffumkleidung besteht, wobei die äußere Umkleidung unmittelbar auf das extrudierte Innenrohr aufgebracht ist. Dabei wird die äußere Schaumstoffumkleidung nach dem Extrudieren des Innenrohrs in Form eines Schaumstoffbandes, beispielsweise durch Kleben, auf dem Innenrohr befestigt.

Darüber hinaus beschreibt die DE 82 00 341 U1 ein flexibles Wärmeleitungs-Verbundrohr mit einem wärmebeständigen, medienführenden Innenrohr, einer Wärmeisolierung aus geschäumtem Kunststoff und einem äußeren Mantel, wobei das Innenrohr aus zwei konzentrischen Kunststoffschichten besteht, zwischen denen als Diffusionssperre eine dünne Metallfolie angeordnet ist, und deren äußere Kunststoffschicht innerhalb der Schaumstoffisolierung von einer Druckbandage umfasst ist, wobei der Schutzmantel aus einem beständigen Kunststoff besteht. Ein Verfahren zur Herstellung des Fernwärmeleitungs-Verbundrohres, insbesondere zum Aufbringen der Wärmeisolierung aus geschäumtem Kunststoff auf das Innenrohr, beschreibt die DE 82 00 341 U1 nicht. Im Allgemeinen erfolgt das Einbringen des Wärmedämmmaterials zwischen das Innenrohr und den Schutzmantel dadurch, dass ein sich aufblähender, ausreagierender Polyurethanschaum in diesen Zwischenraum eingebracht wird.

Diese Kunststoffverbundrohre aus dem Stand der Technik weisen den Nachteil auf, dass die aufgeschäumte Kunststoffummantelung des Innenrohrs nur ein mäßiges Biegeverhalten zeigt. Dadurch sind die Flexibilität und damit die Verlegbarkeit des Kunststoffverbundrohres eingeschränkt. Darüber hinaus kann die Isolierungsschicht nicht kalibriert werden, weil der Aufschäumungsprozess im Zwischenraum zwischen dem Innenrohr und der äußeren Ummantelung erfolgt. Des Weiteren stellt dieser nachträgliche Aufschäumungsprozess einen aufwändigen, zusätzlichen Verfahrensschritt dar.

Dementsprechend liegt der vorliegenden Erfindung die Aufgabe zugrunde, ein Kunststoffverbundrohr zur Verfügung zu stellen, das die Nachteile des Standes der Technik überwindet. Beispielsweise soll das erfindungsgemäße Kunststoffverbundrohr über ein verbessertes Biegeverhalten verfügen und einfacher hergestellt werden können. Des Weiteren liegt die Aufgabe der vorliegenden Erfindung in der Bereitstellung eines Herstellungsverfahrens für ein derartiges verbessertes Kunststoffverbundrohr sowie die Verwendung eines derartigen Kunststoffverbundrohrs.

Diese und andere Aufgaben werden durch ein Kunststoffverbundrohr gemäß Patentanspruch 1, durch eine Verwendung gemäß Patentanspruch 9 bzw. durch ein Verfahren gemäß Patentanspruch 10 gelöst. Bevorzugte Ausführungsformen des erfindungsgemäßen Kunststoffverbundrohres sowie des erfindungsgemäßen Herstellungsverfahrens sind in den davon jeweils abhängigen Patentansprüchen beschrieben.

Gemäß der vorliegenden Erfindung wurde erkannt, dass die Verlegbarkeit eines Kunststoffverbundrohr mit einem von einem Trägermedium durchströmbaren Innenrohr, einer Isolierungsschicht aus Polymerschaum und einer Außenhülle erheblich verbessert wird, wenn die Isolierungsschicht,die zwischen dem Innenrohr und der Außenhülle angeordnet ist, aus einer Vielzahl von Polymerschaumsträngen aufgebaut ist. Dieser erfindungsgemäße Aufbau der Isolierungsschicht aus vielen Polymerschaumsträngen erhöht die Flexibilität des Kunststoffverbundrohres und verbessert dadurch dessen Verlegbarkeit beträchtlich.

Gemäß der vorliegenden Erfindung wird ein derartiges Kunststoffverbundrohr durch ein Verfahren hergestellt, das die folgenden Stufen umfasst:
(i) Extrudieren eines von einem Trägermedium durchströmbaren Innenrohres,
(ii) Extrudieren einer Vielzahl von Polymerschaumsträngen unter Bildung einer Isolierungsschicht um das Innenrohr und
(iii) Extrudieren einer Außenhülle um die das Innenrohr einschließende Isolierungsschicht.

Das erfindungsgemäße Herstellungsverfahren für das Kunststoffverbundrohr ermöglicht einerseits eine Kalibrierung der Isolierungsschicht zwischen dem Extrudieren der Vielzahl von Polymersträngen zur Bildung der Isolierungsschicht und dem Extrudieren der Außenhülle um die Isolierungsschicht, in die das Innenrohr eingeschlossen ist. Andererseits ermöglicht es das erfindungsgemäße Herstellungsverfahren, das Innenrohr, die Polymerstränge der Isolierungsschicht und die Außenhülle in einer Extrusionslinie herzustellen. Dementsprechend werden die Kosten für die Herstellung des Kunststoffverbundrohres beträchtlich reduziert. Darüber hinaus kann durch die Wahl der Parameter sowie der Zusammensetzung der Wärmedämmschicht (z.B. Wahl eines speziellen Polymers sowie Wahl der Dichte des Polymerschaums) die Wärmedämmschicht an die spezifischen Erfordernisse in Bezug auf das erforderliche thermische und mechanische Verhalten angepasst werden.

Es kann sich als vorteilhaft erweisen, wenn die Polymerschaumstränge der Isolierungsschicht untereinander zumindest teilweise miteinander verschmolzen sind. Ein teilweises Verschmelzen der Polymerstränge erhöht die Wärme isolierenden Eigenschaften der Isolierungsschicht. Außerdem wird dadurch eine längsseitige Wasserdichtheit im Falle einer Verletzung der Isolierung gewährleistet. Dementsprechend ist es gemäß der vorliegenden Erfindung bevorzugt, wenn die Polymerschaumstränge der Isolierungsschicht zu mindestens 60 %, stärker bevorzugt zu mindestens 75 %, ganz besonders bevorzugt zu mindestens 85 % miteinander verschmolzen sind. Die Prozentangaben beziehen sich jeweils auf den Anteil an der Gesamtlänge, mit der einzelne Stränge miteinander verbunden sind. In einer ganz besonders bevorzugten Ausführungsform sind die einzelnen Polymerschaumstränge der Isolierungsschicht über die gesamte Länge des Kunststoffverbundrohres miteinander verschmolzen.

Darüber hinaus kann es für das erfindungsgemäße Kunststoffverbundrohr von Vorteil sein, wenn die Polymerschaumstränge der Isolierungsschicht derart um das Innenrohr angeordnet sind, dass die Verschmelzungsstellen zwischen den einzelnen Polymersträngen nicht in einer durchgehenden Ebene liegen. Dies verbessert die wärmeisolierenden Eigenschaften der Isolierungsschicht weiter.

Darüber hinaus kann es sich als vorteilhaft erweisen, wenn die einzelnen Polymerschaumstränge eine Isolierungsschicht mit einer Dicke von 10 mm bis 50 mm, vorzugsweise von 20 mm bis 40 mm bilden. Durch diese Schichtdicke der Isolierungsschicht wird gewährleistet, dass eine Wärmeleitfähigkeit des Kunststoffverbundrohres unter 0,5 W/mK eingehalten wird.

Weiterhin kann es auch vorteilhaft sein, wenn die einzelnen Polymerschaumstränge der Isolierungsschicht zumindest teilweise einen kreisförmigen oder polygonalen, vorzugsweise hexagonalen Querschnitt aufweisen. Dabei versteht es sich, dass einige oder sämtliche Polymerschaumstränge aufgrund des Kontaktes zu benachbarten Polymerschaumsträngen bzw. zu angrenzenden Rohrschichten (Innenrohr, Haftvermittlerschicht, Diffusionssperrschicht und/oder Außenhülle) von der idealen Kreisform oder Polygonform abweichen. Ein derartiger Querschnitt der einzelnen Polymerschaumstränge führt zu einer Anordnung, die eine gleichmäßige Dichteverteilung über den Querschnitt der Isolierungsschicht bewirkt. Dies erhöht die Verformbarkeit des Kunststoffverbundrohres und damit seine Flexibilität weiter. Gleichzeitig bewirkt diese gleichmäßige Dichteverteilung eine verbesserte Druckfestigkeit unter Langzeitbelastung.

Das Material der Isolierungsschicht umfasst vorzugsweise einen temperaturstabilen Polymerschaum, wobei ein temperaturstabiler Polymerschaum mit einer Dichte von höchstens 100 kg/m³ besonders bevorzugt ist. Vorzugsweise liegt der Biege-E-Modul des Polymerschaums im Bereich von 300 MPa bis 400 MPa. Als bevorzugte Materialien für den Polymerschaum kann die Isolierungsschicht Polypropylen-Blends, wie z.B. gut schäumbares PP-HMS (high melt strength polypropylene), Polypropylen/Polyethylen-Copolymere, Polyurethane, Polystyrole, expandierte Polystyrole, Weichsilikone, Polyethylen-Schäume, Schäume aus vernetztem Polyethylen sowie Copolymere und Blends aus den genannten Polymeren, umfassen. Besonders bevorzugt umfasst die Isolierungsschicht einen Polyurethanschaum. Dabei ist es ebenso möglich, dass die Polymerschaumstränge aus unterschiedlichen Materialien ausgebildet sind, wobei bevorzugt die genannten zum Einsatz kommen.

Um die Flexibilität und damit die Verlegbarkeit des erfindungsgemäßen Kunststoffverbundrohres weiter zu erhöhen, kann es sich als nützlich erweisen, wenn die einzelnen Schaumzellen des Polymerschaums der Isolierungsschicht einen mittleren Durchmesser von höchstens 250 µm besitzen. Um einen derartigen mittleren Durchmesser zu erzielen, kann es von Vorteil sein, Nukleierungsmittel in das Polymerschaummaterial einzubringen. Als Beispiele für derartige Nukleierungsmittel können pulverförmige Nukleierungsmittel wie Talkum sowie gasförmige Nukleierungsmittel wie Stickstoff, Kohlendioxid und Butan sowie flüssige Nukleierungsmittel genannt werden. Ebenso können Kombinationen der genannten Nukleierungsmittel zum Einsatz kommen. Zusammen mit flüssigen Treibmitteln, beispielsweise Alkoholen wie Ethanol, Isopropanol, *tert*.Butanol, können die gasförmigen Nukleierungsmittel auch einen Beitrag als gasförmige Treibmittel leisten. Unter Zusatz derartiger Nukleierungsmittel wird das Zellwachstum beschleunigt, so dass Polymerschaumzellen mit dem gewünschten mittleren Durchmesser erhalten werden.

Das Einbringen der Nukleierungsmittel in das Polymerschaummaterial kann beispielsweise dadurch erfolgen, dass das feste Nukleierungsmittel dem Polymergranulat vor dem Extrusionsprozess zugesetzt und im trockenen Zustand mit diesem vermischt wird. Gasförmige Nukleierungsmittel können in das plastifizierte Gemisch aus Polymer und flüssigem Treibmittel im Extruder eingedüst werden. Bei gleichzeitiger Verwendung flüssiger und gasförmiger Nukleierungsmittel wird vorzugsweise zunächst das gasförmige Nukleierungsmittel in das plastifizierte Gemisch aus Polymer und festem Nukleierungsmittel eingedüst und danach wird das flüssige Treibmittel in das resultierende Gemisch eingedüst.

Darüber hinaus ist es hilfreich sein, wenn das von einem Trägermedium durchströmbare Innenrohr ein Polymermaterial, ausgewählt aus der Gruppe, bestehend aus peroxidvernetztem Polyethylen (PE-Xa), silanvernetztem Polyethylen (PE-Xb), elektronenstrahlvernetztem Polyethylen (PE-Xc), azovernetztem Polyethylen (PE-Xd), PE-RT (Polyethylen mit erhöhter Temperaturbeständigkeit gemäß ISO 24033), PE 100, Polybuten, Polypropylen sowie Copolymere und Blends dieser Polymere, umfasst. Durch die Auswahl dieser Materialien ist das von einem Trägermedium durchströmbare Innenrohr für Trägermedien für eine Temperatur von bis zu 100 °C geeignet. Aus diesem Grund ist vernetztes Polyethylen (PE-X), insbesondere peroxidvernetztes Polyethylen, silanvernetztes Polyethylen, elektronenstrahlvernetztes Polyethylen sowie azovernetztes Polyethylen als Material für das Innenrohr besonders bevorzugt.

In Bezug auf das Material der Außenhülle ist es bevorzugt, dass die Außenhülle ein thermoplastisches Polymer umfasst. Dabei kann es sich als vorteilhaft erweisen, wenn die Außenhülle mindestens ein Polymermaterial, ausgewählt aus der Gruppe, bestehend aus Polyethylen, insbesondere LLDPE (lineares Polyethylen niedriger Dichte; linear low density polyethylene), Polypropylen sowie Copolymere und Blends der genannten Polymere, umfasst. Durch Verwendung einer derartigen thermoplastischen Außenhülle wird gewährleistet, dass die darunter liegende Isolierungsschicht vor und während der Verlegung des Kunststoffverbundrohres vor äußeren Einflüssen geschützt ist. In besonders bevorzugten Außenführungsformen ist das Polymermaterial der Außenhülle ein geschäumtes Polymermaterial mit einer Dichte im Bereich von 0,2 g/cm³ bis 0,85 g/cm³, vorzugsweise im Bereich von 0,4 g/cm³ bis 0,7 g/cm³.

Es kann sich auch als nützlich erweisen, wenn zwischen dem Innenrohr und der Isolierungsschicht mindestens eine weitere Schicht vorgesehen ist. Dabei kann es sich um eine Haftvermittlerschicht, eine Diffusionssperrschicht und andere funktionelle Schichten sowie Kombinationen davon handeln. Als Beispiele für die Haftvermittlerschicht sind dabei funktionalisierte Polyolefine, beispielsweise Maleinsäureanhydrid-gepfropftes PE, vorzugsweise Maleinsäureanhydrid-gepfropftes LLDPE zu nennen. Als Diffusionssperrschichten werden vorzugsweise Sauerstoffsperrschichten verwendet. Beispielhafte Materialien für derartige Diffusionssperrschichten sind Ethylen-Vinylalkohol-Copolymere (EVOH) und Polyvinylalkohol sowie dünne Metallschichten (beispielsweise Aluminium).

In einer ganz besonders bevorzugten Ausführungsform ist das erfindungsgemäße Kunststoffverbundrohr aus einem Innenrohr aus peroxidvernetztem Polyethylen, einer Haftvermittlerschicht aus Maleinsäureanhydrid-gepfropftem LLDPE, einer Sauerstoffsperrschicht aus Ethylen-Vinylalkohol-Copolymer, einer Isolierungsschicht aus Polyurethanschaumsträngen sowie einer Außenhülle aus LLDPE von innen nach außen in dieser Reihenfolge aufgebaut.

Das erfindungsgemäße Kunststoffverbundrohr ist für eine zum Transport eines Wärmeträgermediums in einem Nah- oder Fernwärmenetz besonders geeignet.

Das erfindungsgemäße Kunststoffverbundrohr wird durch ein Verfahren hergestellt, in dem in einem mehrstufigen Extrusionsprozess zunächst das Innenrohr extrudiert wird, anschließend eine Vielzahl von Polymerschaumsträngen unter Bildung der Isolierungsschicht um das extrudierte Innenrohr extrudiert werden und abschließend in einer nachfolgenden Ummantelungsextrusion die Außenhülle um die Isolierungsschicht extrudiert wird.

In dem erfindungsgemäßen Verfahren kann es vorteilhaft sein, zwischen dem Extrudieren der Vielzahl von Polymersträngen unter Bildung der Isolierungsschicht um das Innenrohr und dem Extrudieren der Außenhülle um die so gebildete Isolierungsschicht eine Kalibrierung der Isolierungsschicht durchzuführen.

Darüber hinaus ist es unter wirtschaftlichen Gesichtspunkten bevorzugt, das mehrstufige Extrusionsverfahren in einer einzigen Extrusionslinie durchzuführen.

Weiterhin ist es in dem erfindungsgemäßen Verfahren bevorzugt, das Extrudieren der Vielzahl von Polymersträngen unter Verwendung einer Lochdüse mit radial versetzten Bohrungen durchzuführen. Dadurch soll gewährleistet werden, dass die Verschmelzungsstellen der einzelnen Polymerstränge der Isolierungsschicht nicht in einer durchgehenden Ebene liegen.

Bevorzugte Ausführungsformen der vorliegenden Erfindung werden im Folgenden exemplarisch unter Bezugnahme auf die beigefügten Zeichnungen beschrieben, die jedoch nicht als einschränkend aufzufassen sind.

### Kurze Beschreibung der Figuren

- Fig. 1: zeigt eine schematische, nicht maßstabsgetreue Querschnittsdarstellung einer Ausführungsform des erfindungsgemäßen Kunststoffverbundrohres.
- Fig. 2: zeigt schematische, nicht maßstabsgetreue eine Querschnittsdarstellung einer weiteren Ausführungsform des erfindungsgemäßen Kunststoffverbundrohres.
- Fig. 3: zeigt eine schematische, nicht maßstabsgetreue Querschnittsdarstellung einer weiteren Ausführungsform des erfindungsgemäßen Kunststoffverbundrohres.
- Fig. 4: zeigt eine schematische Darstellung einer Vorrichtung zur Durchführung des erfindungsgemäßen Herstellungsverfahrens.
- Fig. 5: zeigt eine schematische Darstellung einer Lochdüse mit radial versetzten Bohrungen zur Verwendung in dem erfindungsgemäßen Herstellungsverfahren.

### Detaillierte Beschreibung der bevorzugten Ausführungsformen

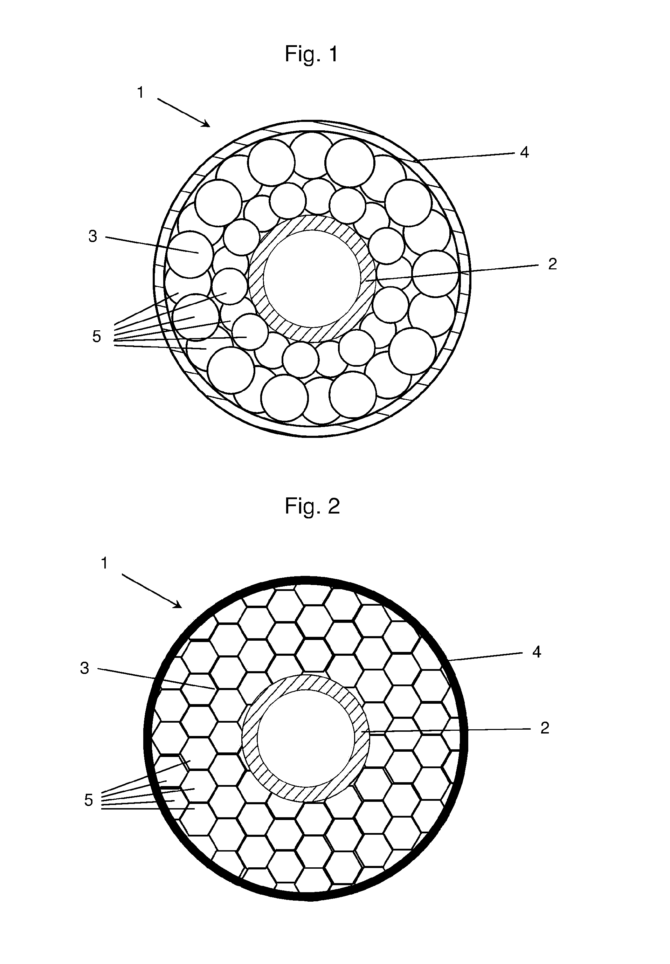

In Figur 1 ist eine Ausführungsform des erfindungsgemäßen mehrschichtigen Kunststoffrohres 1 in einer Querschnittsdarstellung dargestellt. Bei der innersten Schicht des mehrschichtigen Kunststoffrohrs 1 handelt es sich um ein Innenrohr 2, das vom Wärmeträgermedium (vorzugsweise Wasser, aber auch Wasser-Glykol-Gemischen) durchströmt werden kann. Damit das Innenrohr 2 einer Temperatur des darin strömenden Trägermediums von bis zu etwa 100 °C standhalten kann, ist das Innenrohr 2 vorzugsweise aus einem temperaturbeständigen Kunststoffmaterial aufgebaut. Das temperaturbeständige Kunststoffmaterial ist dabei vorzugsweise aus vernetzten Polyethylenen (peroxidvernetztem Polyethylen, silanvernetztem Polyethylen, elektronenstrahlvernetztem Polyethylen und azovernetztem Polyethylen), PE-RT, PE 100, Polybuten, Polypropylen sowie Copolymeren und Blends dieser Polymere ausgewählt, wobei vernetztes Polyethylen und insbesondere peroxidvernetztes Polyethylen (PE-Xa) besonders bevorzugt sind. Die Wanddicke des Innenrohrs 2 liegt vorzugsweise im Bereich von 4 mm bis 30 mm, insbesondere im Bereich von 7 mm bis 25 mm.

Auf das Innenrohr 2 ist eine Isolierungsschicht 3 aus Polymerschaum aufgebracht, wobei der Polymerschaum aus einer Vielzahl von Polymerschaumsträngen 5 aufgebaut ist. Die Dicke der aus den einzelnen Polymerschaumsträngen 5 gebildeten Isolierungsschicht 3 beträgt dabei vorzugsweise 10 mm bis 50 mm, besonders bevorzugt 20 mm bis 40 mm bilden. Durch eine Dicke der Isolierungsschicht in diesem Bereich ist eine Wärmeleitfähigkeit des Kunststoffverbundrohres 1 von weniger als 0,5 W/mK bei angemessenen Herstellungskosten gewährleistet. Die einzelnen Stränge 5 der Isolierungsschicht 3 sind aus einem temperaturstabilen Polymerschaum gebildet. Dabei haben sich insbesondere Polypropylen-Blends, wie z.B. gut schäumbares PP-HMS (high melt strength polypropylene), Polypropylen/Polyethylen-Copolymere, Polyurethane, Polyethylen-Schäume, Schäume aus vernetztem Polyethylen sowie Copolymere und Blends aus den genannten Polymeren als geeignete Materialien erwiesen. Besonders bevorzugt sind die Stränge 5 der Isolierungsschicht 3 aus einem Polyurethanschaum gebildet. Durch die Verwendung derartiger Materialien lässt sich ein Biege-E-Modul des Polymerschaums im Bereich von 300 MPa bis 400 MPa bei einer Dichte des Polymerschaums von höchstens 100 kg/m³ erzielen. Darüber hinaus weisen einige der Polymerschaumstränge 5 einen annähernd kreisförmigen Querschnitt auf, während die Querschnittsform anderer Polymerschaumstränge 5 aufgrund des Kontaktes zu benachbarten Polymerschaumsträngen oder zum angrenzenden Innenrohr 2 bzw. zur angrenzenden Außenhülle 4 von der Kreisform mehr oder weniger stark abweicht. Der mittlere Durchmesser der einzelnen Schaumzellen der Polymerschaumstränge 5 der Isolierungsschicht 3 beträgt vorzugsweise höchstens 250 µm. Erfindungsgemäß wird ein derartiger mittlerer Durchmesser durch Zusatz von Nukleierungsmitteln zu dem verwendeten Polymerschaummaterial vor dem Aufschäumen erzielt. Durch einen mittleren Durchmesser im genannten Bereich werden die Flexibilität und damit die Verlegbarkeit des resultierenden erfindungsgemäßen Kunststoffverbundrohres 1 weiter zu erhöht.

In bevorzugten Ausführungsformen des erfindungsgemäßen Kunststoffverbundrohres 1 sind benachbarte Polymerschaumstränge 5 der Isolierungsschicht 3 untereinander zumindest teilweise miteinander verschmolzen. Vorzugsweise erstrecken sich die Verschwei-βungsstellen zwischen den einzelnen Polymerschaumsträngen 5 dabei jeweils über die gesamte Länge des Kunststoffverbundrohres 1. In besonders bevorzugten Ausführungsformen des erfindungsgemäßen Kunststoffverbundrohres 1 sind die Polymerschaumstränge 5 der Isolierungsschicht 3 derart um das Innenrohr 2 angeordnet, dass die Verschmelzungsstellen zwischen den einzelnen Polymersträngen 5 nicht in einer durchgehenden Ebene liegen.

Im erfindungsgemäßen Kunststoffverbundrohr 1 ist die Isolierungsschicht 3 von einer Außenhülle 4 umgeben, die vorzugsweise eine Dicke von 2 mm bis 10 mm, insbesondere von 3 mm bis 8 mm aufweist. Als Materialien für die Außenhülle 2 haben sich insbesondere thermoplastische Polymere als geeignet erwiesen. Zu diesem Zweck kommen Polyethylene, insbesondere LLDPE, Polypropylene sowie Copolymere und Blends der genannten Polymere zur Verwendung. Die Außenhülle 2 bietet der darunter liegenden Isolierungsschicht 3 einen mechanischen und chemischen Schutz vor und während der Verlegung des Kunststoffverbundrohres vor äußeren Einflüssen.

Eine weitere Ausführungsform des erfindungsgemäßen Kunststoffverbundrohres 1 ist in Fig. 2 in einer Querschnittsdarstellung gezeigt. Die Ausführungsform gemäß Fig. 2 unterscheidet sich von der in Fig. 1 dargestellten Ausführungsform des erfindungsgemäßen Kunststoffverbundrohres 1 lediglich hinsichtlich der Querschnittsform der einzelnen Polymerschaumstränge 5, wobei die Polymerschaumstränge 5 gemäß Fig. 2 eine hexagonale Form aufweisen. Dabei zeigen wiederum einige der Polymerschaumstränge 5 einen nahezu idealen sechseckigen Querschnitt, während bei der Querschnittsform anderer Polymerschaumstränge 5 aufgrund des Kontaktes zu benachbarten Polymerschaumsträngen 5 oder zum angrenzenden Innenrohr 2 bzw. zur angrenzenden Außenhülle 4 mehr oder weniger starke Abweichungen von der idealen hexagonalen Form auftreten. Der mittlere Durchmesser der einzelnen Schaumzellen der Polymerschaumstränge 5 der Isolierungsschicht 3 beträgt wiederum bevorzugt höchstens 250 µm, was auch hier durch Beimengung von Nukleierungsmitteln zu dem verwendeten Polymerschaummaterial vor dem Aufschäumen erzielt wird. Darüber hinaus gelten die Ausführungen zum Innenrohr 2, zur Isolierungsschicht 3 und zur Außenhülle 4 in Bezug auf die in Fig. 1 dargestellte Ausführungsform für das in Fig. 2 dargestellte erfindungsgemäße Kunststoffverbundrohr 1 entsprechend.

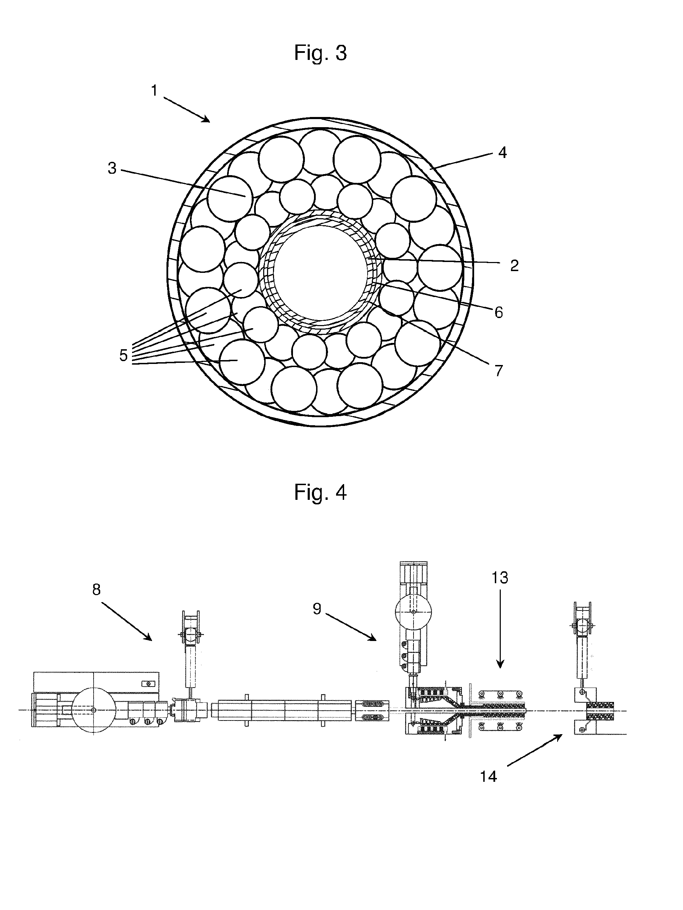

In Figur 3 ist eine weitere Ausführungsform des erfindungsgemäßen mehrschichtigen Kunststoffrohres 1 in einer Querschnittsdarstellung gezeigt. Die Ausführungsform gemäß Fig. 3 unterscheidet sich von der in Fig. 1 dargestellten Ausführungsform des erfindungsgemäßen Kunststoffverbundrohres 1 lediglich dadurch, dass auf dem Innenrohr 2 zwei weitere Schichten angeordnet sind. Dabei ist direkt auf dem Innenrohr 2 eine Haftvermittlerschicht 6 angeordnet. Diese Haftvermittlerschicht 6 weist vorzugsweise eine Schichtdicke von 25 µm bis 500 µm und besonders bevorzugt von 50 µm bis 200 µm auf. Als Materialien für die Haftvermittlerschicht 6 sind dabei funktionalisierte Polyolefine, beispielsweise Maleinsäureanhydrid-gepfropftes PE, vorzugsweise Maleinsäureanhydrid-gepfropftes LLDPE zu nennen. Diese Haftvermittlerschicht 6 ist von einer Diffusionssperrschicht 7 umgeben. Diese Diffusionssperrschicht 7 weist vorzugsweise eine Schichtdicke von 100 µm bis 600 µm und besonders bevorzugt von 200 µm bis 400 µm auf. Als Material für die Diffusionssperrschicht 7 wird vorzugsweise Polyvinylakohol (PVA), ein Polyamid (PA), Ethylen-Vinylalkohol-Copolymer (EVOH) oder eine Metallfolie (z.B. Aluminium) eingesetzt. In anderen bevorzugten Ausführungsformen kann zwischen der Diffusionssperrschicht 7 und der Isolierungsschicht 3 eine weitere Haftvermittlerschicht angeordnet sein, die hinsichtlich bevorzugter Schichtdicken und Materialien der Haftvermittlerschicht 6 entspricht. Auf dieser Diffusionssperrschicht ist in dem erfindungsgemäßen Kunststoffverbundrohr 1 die Isolierungsschicht 3 angeordnet. Ansonsten gelten die Erläuterungen zum Innenrohr 2, zur Isolierungsschicht 3 und zur Außenhülle 4, die in Bezug auf die in Fig. 1 dargestellte Ausführungsform ausgeführt wurden, für das in Fig. 3 dargestellte erfindungsgemäße Kunststoffverbundrohr 1 in analoger Weise.

Das erfindungsgemäße Kunststoffverbundrohr 1 wird durch ein mehrstufiges Extrusionsverfahren hergestellt, wobei Fig. 4 eine Vorrichtung zur Durchführung des erfindungsgemäßen Herstellungsverfahrens schematisch zeigt.

Dabei wird zunächst das Polymermaterial des Innenrohres 2, dem ggf. weitere Komponenten wie Vernetzungsmittel (z.B. ein organisches Peroxid zur Herstellung eines Innenrohres 2 aus PE-Xa) und/oder ein Stabilisator sowie weitere Bestandteile zugesetzt sind, über einen Einfülltrichter einer ersten Extrusionsvorrichtung 8 zugeführt und daraus in Rohrform extrudiert. Handelt es sich bei dem Innenrohr 2 um ein Rohr aus vernetztem Polyethylen erfolgt in der ersten Extrusionsvorrichtung 8 auch die Vernetzung. Bei der Herstellung eines PE-Xa-Innenrohres 2 wird bevorzugt das in der DE 102 51 152 A1 beschriebene Verfahren verwendet.

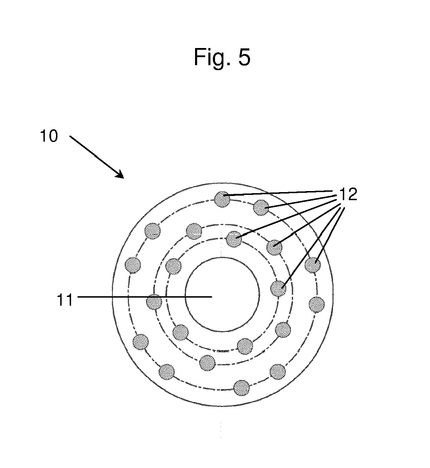

Das so gebildete Innenrohr 2 wird dann nach Härtung und ggf. Vernetzung einer zweiten Extrusionsvorrichtung 9 zugeführt, in der um das Innenrohr 2 die Polymerschaumstränge 5 extrudiert werden, wobei dem Polymerschaumaterial vorzugsweise Nukleierungsmittel zugesetzt werden, um den mittleren Durchmesser der einzelnen Schaumzellen der Polymerschaumstränge 5 einstellen zu können. Das Extrudieren der Vielzahl von Polymersträngen 5 erfolgt in der zweiten Extrusionsvorrichtung 9 bevorzugt unter Verwendung einer in Fig. 5 dargestellten Lochdüse 10 mit einer zentralen Öffnung 11 zur Durchführung des Innenrohrs 2 und radial versetzten Bohrungen 12. Durch die radial versetzten Bohrungen 12 ist gewährleistet, dass die Verschmelzungsstellen der einzelnen Polymerstränge 5 der Isolierungsschicht 3 nicht in einer durchgehenden Ebene liegen.

In alternativen Ausführungsformen des erfindungsgemäßen Verfahrens wird das fertige Innenohr 2 zunächst beispielsweise auf einer Haspel gelagert und nach der Lagerung der zweiten Extrusionsvorrichtung 9 zugeführt. Es ist jedoch bevorzugt, das erfindungsgemäße Herstellungsverfahren in einer einzigen Extrusionslinie durchzuführen.

Das von den Polymerschaumsträngen 5 umgebene Innenrohr 2 durchläuft danach vorzugsweise eine Kalibirierungsstrecke 13, in der den Polymerschaumsträngen 5 die Gelegenheit gegeben wird, sich bis auf ihren endgültigen Durchmesser auszudehnen. Dadurch wird eine weitgehend homogene Dichteverteilung der Isolierungsschicht 3 über den Querschnitt erzielt.

Im nächsten Verfahrensschritt wird das von den Polymerschaumsträngen 5 umgebene Innenrohr 2 einer dritten Extrusionsvorrichtung 14 zugeführt, in der die Außenhülle 4 um die Isolierungsschicht 3 extrudiert wird. In der dritten Extrusionsvorrichtung 14 können auch weitere Schichten wie die Haftvermittlerschicht 6 und die Diffusionssperrschicht 7 in einer Coextrusionsstufe um die Isolierungsschicht 3 extrudiert werden.

Abschließend kann das erfindungsgemäße Kunststoffverbundrohr auf eine Haspel aufgewickelt aufgewickelt und an seinem Lagerort bzw. Verlegungsort gebracht werden.

Das erfindungsgemäße Kunststoffverbundrohr 1 verfügt über ein verbessertes Biegeverhalten verfügen und lässt sich in einem mehrstufigen Extrusionsprozess einfach und kostengünstig herstellen.

## Patentansprüche

1. Kunststoffverbundrohr (1), umfassend ein von einem Trägermedium, insbesondere Wasser, durchströmbares Innenrohr (2), eine Isolierungsschicht (3) aus Polymerschaum und eine Außenhülle (4), **dadurch gekennzeichnet, dass** der Polymerschaum der Isolierungsschicht (3) aus einer Vielzahl von Polymerschaumsträngen (5) aufgebaut ist.

2. Kunststoffverbundrohr (1) gemäß Anspruch 1, **dadurch gekennzeichnet, dass** die Polymerschaumstränge (5) der Isolierungsschicht (3) zumindest teilweise miteinander verschmolzen sind.

3. Kunststoffverbundrohr (1) gemäß Anspruch 2, **dadurch gekennzeichnet, dass** die Polymerschaumstränge (5) der Isolierungsschicht (3) derart um das Innenrohr (2) angeordnet sind, dass die Verschmelzungsstellen der einzelnen Polymerschaumstränge (5) nicht in einer durchgehenden Ebene liegen.

4. Kunststoffverbundrohr (1) gemäß einem der vorangegangenen Ansprüche, **dadurch gekennzeichnet, dass** das Kunststoffverbundrohr (1) mindestens eine weitere Schicht, ausgewählt aus der Gruppe, bestehend aus einer Haftvermittlerschicht (5), einer Diffusionssperrschicht (6) sowie Kombinationen davon, umfasst.

5. Kunststoffverbundrohr (1) gemäß einem der vorangegangenen Ansprüche, **dadurch gekennzeichnet, dass** die einzelnen Polymerschaumstränge (5) der Isolierungsschicht (3) zumindest teilweise einen kreisförmigen oder polygonalen, insbesondere hexagonalen Querschnitt aufweisen.

6. Kunststoffverbundrohr (1) gemäß einem der vorangegangenen Ansprüche, **dadurch gekennzeichnet, dass** die Isolierungsschicht (3) einen temperaturstabilen Polymerschaum, insbesondere einen Polypropylen-Blend, ein PP-HMS, ein Polypropylen/Polyethylen-Copolymer, ein Polyurethan, ein Polystyrol, ein expandiertes Polystyrol, ein Weichsilikon, ein Polyethylen, ein vernetztes Polyethylen sowie Copolymere und Blends aus den genannten Polymeren, umfasst.

7. Kunststoffverbundrohr (1) gemäß einem der vorangegangenen Ansprüche, **dadurch gekennzeichnet, dass** ein von einem Trägermedium durchströmbare Innenrohr (2) mindestens ein Polymermaterial, ausgewählt aus der Gruppe, bestehend aus peroxidvernetztem Polyethylen, silanvernetztem Polyethylen, elektronenstrahlvernetztem Polyethylen, azovernetztem Polyethylen, PE-RT, PE 100, Polybuten, Polypropylen sowie Copolymere und Blends dieser Polymere, umfasst.

8. Kunststoffverbundrohr (1) gemäß einem der vorangegangenen Ansprüche, **dadurch gekennzeichnet, dass** die Außenhülle (4) mindestens ein Polymermaterial, ausgewählt aus der Gruppe, bestehend aus Polyethylen, insbesondere LLDPE (linear low density polyethylene), Polypropylen sowie Copolymere und Blends der genannten Polymere, umfasst.

9. Kunststoffverbundrohr (1) gemäß Anspruch 8, **dadurch gekennzeichnet, dass** das Polymermaterial der Außenhülle (4) ein geschäumtes Polymermaterial mit einer Dichte im Bereich von 0,2 g/cm³ bis 0,85 g/cm³ ist.

10. Kunststoffverbundrohr (1) gemäß einem der vorangegangenen Ansprüche, **dadurch gekennzeichnet, dass** das Kunststoffverbundrohr (1) aus einem Innenrohr (2) aus peroxidvernetztem Polyethylen, einer Haftvermittlerschicht (5) aus Maleinsäureanhydrid-gepfropftem LLDPE, einer Diffusionssperrschicht (6) aus Ethylen-Vinylalkohol-Copolymer, einer Isolierungsschicht aus Polymerschaumsträngen, insbesondere Strängen aus Polypropylen-Blend, PP-HMS, Polypropylen/Polyethylen-Copolymer, Polyurethan, Polystyrol, expandiertem Polystyrol, Weichsilikon, Polyethylen, vernetztem Polyethylen sowie Copolymeren und Blends aus den genannten Polymeren, sowie einer Außenhülle (4) aus LLDPE von innen nach außen in dieser Reihenfolge aufgebaut.

11. Verwendung eines Kunststoffverbundrohres (1) gemäß einem der Ansprüche 1 bis 10 zum Transport eines Wärmeträgermediums in einem Nah- oder Fernwärmenetz.

12. Verfahren zur Herstellung eines Kunststoffverbundrohres (1) gemäß einem der Ansprüche 1 bis 10, wobei das Verfahren die folgenden Stufen umfasst:
(i) Extrudieren eines von einem Trägermedium durchströmbaren Innenrohres (2),
(ii) Extrudieren einer Vielzahl von Polymerschaumsträngen (5) unter Bildung einer Isolierungsschicht (3) um das Innenrohr (2), und
(iii) Extrudieren einer Außenhülle (4) um die das Innenrohr (2) einschließende Isolierungsschicht (3).

13. Verfahren gemäß Anspruch 12, **dadurch gekennzeichnet, dass** zwischen den Extrusionsstufen (ii) und (iii) eine Kalibrierung der Isolierungsschicht (3) erfolgt.

14. Verfahren gemäß einem der Ansprüche 12 bis 13, **dadurch gekennzeichnet, dass** das Extrudieren (ii) der Vielzahl von Polymersträngen unter Verwendung einer Lochdüse mit radial versetzten Bohrungen durchgeführt wird.

15. Verfahren gemäß einem der Ansprüche 12 bis 14, **dadurch gekennzeichnet, dass** das Extrudieren (iii) der Außenhülle (4) derart durchgeführt wird, dass die Außenhülle (4) nach dem Austritt aus der Düse an die Isolierungsschicht (3) angefügt wird.
